# EUROPEAN PATENT APPLICATION

(11) **EP 3 719 885 A1**
(43) Date of publication of application: **07.10.2020**
(21) Application number: 17928103.5
(22) Date of filing: 28.11.2017
(51) Int. Cl.: H01M 4/505, H01M 4/525

(54) **TERNARY PRECURSOR MATERIAL AND PREPARATION METHOD THEREFOR**

(71) Applicant: XTC New Energy Materials(xiamen) Ltd., Xiamen, Fujian 361026 (CN)
(72) Inventor: MA, Yuefei, Xiamen Fujian 361026 (CN); ZHENG, Juan, Xiamen Fujian 361026 (CN)
(74) Representative: Zaboliene, Reda
(86) International application number: PCT/CN2017/113324
(87) International publication number: WO 2019/104473

(57) **Abstract**

A method for manufacturing the ternary precursor material comprises: at step S1, weighing a nickel source, a cobalt source and a manganese source according to a predetermined ratio and dissolving in a deionized water to form a first mixed solution, to cause a molar ratio of nickel ions, cobalt ions and manganese ions in the first mixed solution to be a predetermined ratio; at step S2, adding the first mixed solution and a first alkaline solution into a first reactor, then adding a first complexing agent, the first mixed solution reacting with hydroxide ions in the first reactor to generate crystal seeds; at step S3, adding the crystal seeds generated at step S2 into a second reactor, then adding a second complexing agent, a second mixed solution formed by dissolving a nickel source, a cobalt source and a manganese source in deionized water, and a second alkaline solution into the second reactor to fully react and form a slurry comprising sediments, a solid content of the slurry controlled to be within a predetermined range; at step S4, transferring the slurry generated at step S3 into an aging tank for further chemical reactions, then performing a solid-liquid separation, and washing the separated sediments with deionized water; at step S5, drying the sediments obtained at step S4 in an oxygen-rich atmosphere to obtain the ternary precursor material.

## Description

### FIELD OF THE INVENTION

The disclosure relates to a ternary precursor material for a lithium-ion battery and a method for manufacturing the same.

### BACKGROUND

A ternary material is a laminated nickel-cobalt-manganese composite positive electrode particle, comprises nickel, cobalt and manganese as main metal elements. Compared with LiCoO₂, LiNiO₂ or LiMn₂O₄, the ternary material has low cost, large discharge capacity, excellent cycling performance, excellent thermal stability, and stable structures performance. Through the synergistic effect of Ni-Co-MN, combining the excellent cycling performance of the lithium cobaltate, the high specific capacity of the lithium nickelate, and the high safety and low cost of the lithium manganite, the ternary material has a comprehensive performance superior to any single compound, and has become the most promising cathode material for lithium ion batteries.

A ternary precursor material are the key raw materials for preparation of the ternary material. The physical and chemical properties of the ternary precursor material directly affect the electrochemical properties of the ternary material and restrict the application of the ternary material, which include a morphology of the ternary precursor, particle size distribution, crystal structure and so on. Current processes for manufacturing the ternary precursor material are difficult to control the internal structures. The ternary material made of the current ternary precursor material can't meet the requirements of indexes for on-board batteries.

### SUMMARY OF THE INVENTION

In view of the above, an objective of the present disclosure is to provide a ternary precursor material that satisfies the requirements of indexes for on-board batteries and has controllable structure, and a method for manufacturing the ternary precursor material, and a ternary material.

According to an embodiment, a method for manufacturing the ternary precursor material comprises:
S1, weighing a nickel source, a cobalt source and a manganese source according to a predetermined ratio and dissolving the nickel source, the cobalt source and the manganese source in a deionized water to form a first mixed solution, to cause a molar ratio of nickel ions, cobalt ions and manganese ions in the first mixed solution to be a predetermined ratio; S2, adding the first mixed solution and a first alkaline solution into a first reactor, then adding a first complexing agent into the first reactor, the first mixed solution reacting with hydroxide ions in the first reactor to generate crystal seeds; S3, adding the crystal seeds generated at step S2 into a second reactor, then adding a second complexing agent, a second mixed solution formed by dissolving a nickel source, a cobalt source and a manganese source in deionized water, and a second alkaline solution into the second reactor to fully react and form a slurry comprising sediments, a solid content of the slurry controlled to be within a predetermined range; S4, transferring the slurry generated at step S3 into an aging tank for further reactions, then performing a solid-liquid separation, and washing the separated sediments with deionized water; S5, drying the sediments obtained at step S4 in an oxygen-rich atmosphere to obtain the ternary precursor material.

Further, the first reactor and the second reactor are reaction kettles having a large liquid circulation flux.

Further, at step S1, the first complexing agent is continuously added into the first reactor at a predetermined rate, and a time period for continuously adding the first complexing agent is between 1 hour and 24 hours.

Further, at step S2, a potential of hydrogen value in the first reactor is between 10.5 and 12.8, a reacting temperature in the first reactor is between 40 degrees Celsius and 80 degrees Celsius.

Further, at step S2, the crystal seeds has a diameter ranging from 1 µm to 9 µm.

Further, at step S3, the slurry has a solid content of 700 g/L to 1600g/L.

Further, at step S3, a potential of hydrogen value in the second reactor is between 10.5 and 12.8.

Further, at step S5, a temperature of drying is between 270 degrees Celsius and 350 degrees Celsius, and a time period of drying is between 1 hour and 4 hours.

A ternary precursor material has a molecular formula of NiₓCo_{y}Mn_{z}(OH)₂; wherein, x+y+z=1, 0 < x < 1, 0 < z < 1, the ternary material precursor is a spheroidal structure, and comprises a shell, a particle core and a transition layer; the shell is a dense structure, and the particle core is a loose porous structure; the transition layer is located between the shell and the particle core, the ternary precursor material is a mixture of nickel hydroxide, cobalt hydroxide and manganese hydroxide at the atomic level, a crystallinity of the shell is greater than a crystallinity of the particle core, and a crystallinity of the transition layer is between the crystallinity of the shell and the crystallinity of the particle core.

Further, D50 of the ternary precursor material is between 2 µm and 18 µm, and (D5+D95):D50 ≤ 2.2:1.

Further, the shell has a thickness of 0.5 µm to 10 µm, a thickness of the transition layer is less than 2 µm, a diameter of the particle core of the ternary precursor material is less than 10 µm; a tap density of the shell is greater than a tap density of the particle core, the tap density of the shell is greater than or equal to 2.5 g/cm³, the tap density of the particle core is less than or equal to 3.0 g/cm³.

Further, the diameter of the shell of the nary precursor and the diameter of the particle core are in a ratio of 1:1 to.

Further, the density of the particle core of the nary precursor increases gradually from an interior to a circumferential region.

Further, the particle core of the ternary precursor has a pore diameter of 0.1 µm to 2 µm.

Further, the ternary precursor material has a porosity of 20% to 70%.

### BRIEF DESCRIPTION OF THE DRAWINGS

Implementations of the disclosure will now be described, by way of embodiments only, with reference to the attached figures to better illustrate details and features of the present disclosure.
FIG. 1 is a flowchart of an embodiment of a method for manufacturing a ternary precursor material.
FIG. 2 shows an embodiment of the particle size distribution of the ternary material precursor.
FIG. 3 shows an embodiment of micro morphology of the ternary material precursor.
FIG. 4 is a sectional view of one of the ternary precursor material of FIG. 3.

### DETAILED DESCRIPTION OF THE INVENTION

Numerous specific details are set forth in order to provide a thorough understanding of the embodiments described herein. However, the description is not to be considered as limiting the scope of the embodiments described herein. It should be noted that a number of variations and modifications may be made by the persons skilled in the art without departing from the inventive concept. These are all within the scope of protection of the present invention.

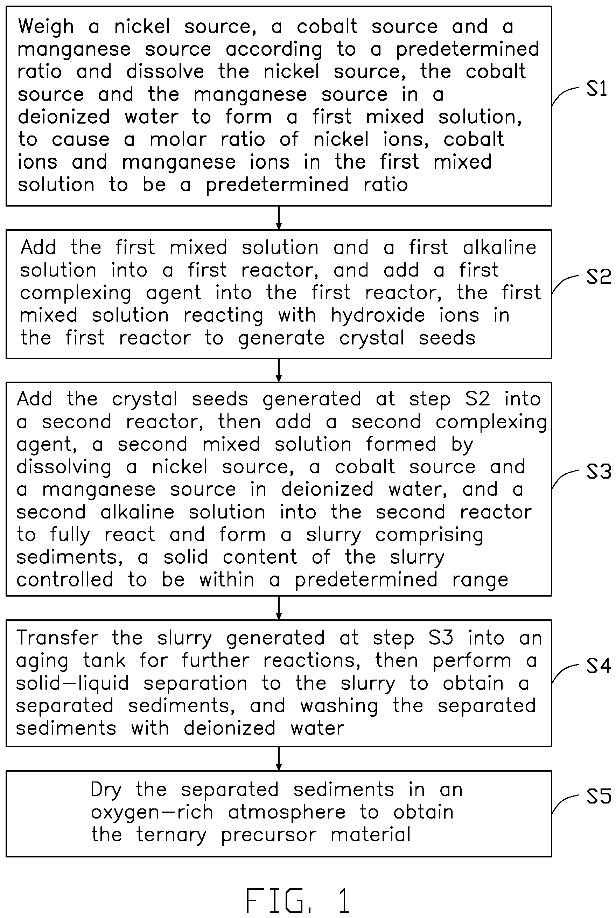

FIG. 1 illustrates a flowchart of a method for manufacturing the ternary precursor material provided by the present disclosure. The method for manufacturing the ternary precursor material comprises following steps.

At step S1, a nickel source, a cobalt source and a manganese source are weighed according to a predetermined ratio and dissolved in deionized water to form a first mixed solution, to cause a molar ratio of nickel ions, cobalt ions and manganese ions in the first mixed solution to be a predetermined ratio.

The nickel source, the cobalt source and the manganese source are water-soluble salts. Specifically, the nickel source may be at least one of nickel sulfate, nickel nitrate and nickel chloride. The cobalt source may be at least one of cobalt sulfate, cobalt nitrate and cobalt chloride. The manganese source may be at least one of manganese sulfate, manganese nitrate and manganese chloride. The molar ratio of the nickel ions, the cobalt ions and the manganese ions in the first mixed solution may be adjusted according to actual needs, which is not limited in the present application.

At step S2, the first mixed solution and a first alkaline solution are added into a first reactor, and a first complexing agent is added. The first mixed solution reacts with hydroxide ions in the first reactor to generate crystal seeds.

In an embodiment, the first reactor is a reaction kettle. Specifically, the first reactor is a large liquid circulation flux reaction kettle. The reaction kettle has a large liquid circulation flux of 10 m³/h to 40 m³/h. Further, in an embodiment, the reaction kettle is an induction draft tube structure. The seed reactor has a base solution therein before adding the mixed solution. The base solution is a blank base solution, for example, the base solution may be deionized water. A liquid level of the base solution in the seed reactor is about 10 cm to about 100 cm higher than the feed inlet. In other words, the feed inlet of the seed reactor is located below the liquid level of the base solution. So a solution added into the seed reactor can be dispersed quickly.

Specifically, the first mixed solution is added into the first reactor, and then the first complexing agent is continuously added into the first reactor at a predetermined rate. In an embodiment, the first complexing agent is ammonium hydroxide, and a concentration of the ammonium hydroxide gradually increases from 0 g/L to 45 g/L. The ammonium hydroxide may be continuously added for 1 hour to 24 hours. In another embodiment, the first complexing agent may be at least one of ammonium sulfate, ethylenediaminetetraacetic acid (EDTA), sodium bicarbonate, and oxalic acid.

The first mixed solution reacts with the first alkaline solution and the ammonium hydroxide to generate precipitation. A potential of hydrogen value of the solid-liquid mixture in the first reactor is controlled between 10.5 and 12.8, and a reacting temperature in the first reactor is controlled between 40 degrees Celsius and 80 degrees Celsius.

In an embodiment, hydroxide ions of the first alkaline solution and metal cations of the first mixed solution are in a molar ratio of 0.5:1 to 2.8:1. The first alkaline solution can be at least one of sodium hydroxide solution and potassium hydroxide solution.

In the mixture, nickel ions, cobalt ions and manganese ions combine with the hydroxide ions of the first alkaline solution and hydroxide ions of the ammonium hydroxide to form a mixture of nickel hydroxide, cobalt hydroxide and manganese hydroxide. The crystal seeds are particles formed by the mixture. The crystal seeds has a diameter of 1 µm to 9 µm.

At step S3, the crystal seeds generated at step S2 are added into a second reactor, then a second complexing agent, a second mixed solution formed by dissolving a nickel source, a cobalt source and a manganese source in deionized water, and a second alkaline solution are added into the second reactor to react and form a slurry comprising solid sediments. A solid content of the slurry is controlled to be within a predetermined range.

In an embodiment, the second reactor is also a reaction kettle having a large liquid circulation flux, and also an induction draft tube structure. In the specific reaction process, after adding the crystal seeds into the second reactor, the second complexing agent is added thereto and a concentration of the second complexing agent is controlled. Then the second mixed solution, and the second alkaline solution are added into the second reactor in the order written to react and form the slurry comprising sediments. Crystal seeds generated at step S2 act as a particle core and continue to grow in the second reactor to form the sediment.

In an embodiment, the second mixed solution is formed by weighing a nickel source, a cobalt source and a manganese source according to a predetermined and dissolving the nickel source, the cobalt source and the manganese source in water. The type of the nickel source, the cobalt source and the manganese source may be the same as or different from the type of the nickel source, the cobalt source and the manganese source in the first mixed solution, which is not limited by the present disclosure. In addition, a molar concentration of nickel ions, a molar concentration of cobalt ions and a molar concentration of manganese ions may be the same as or different from a molar concentration of nickel ions of the first mixed solution, a molar concentration of cobalt ions of the first mixed solution and a molar concentration of manganese ions of the first mixed solution, which is not limited in the present disclosure.

The second complexing agent may be at least one of ammonium hydroxide, ammonium sulfate, EDTA, sodium bicarbonate, and oxalic acid. The second complexing agent may be the same as or different from the first complexing agent. In an embodiment, the second complexing agent is ammonium hydroxide. The ammonium hydroxide has a concentration of 1.0% to 20.0%. The ammonium hydroxide is continuously added into the second reactor by a metering pump at a predetermined rate. In another embodiment, the second complexing agent may be other kinds of complexing agents, which is not limited in the present disclosure.

Cations of the second mixed solution have a molar concentration of 0.5 mol/L to 2.8 mol/L. The metal cations of the second mixed solution and the metal cations of the first mixed solution are in a molar ratio of 0.4:1 to 1.5:1.

A potential of hydrogen value of a reaction environment at step S3 is controlled between 10.5 and 12.8.- The type of the nickel source, the cobalt source and the manganese source in the second mixed solution may be the same as or different from the type of the nickel source, the cobalt source and the manganese source in the first mixed solution, which is not limited by the present disclosure. A molar ratio between the nickel ions, the cobalt ions and the manganese ions in the second mixed solution may be adjusted according to actual needs, which is not limited in the present disclosure.

In an embodiment, a solid content of the slurry can be adjusted by a filtration return process. Specially, the solid content of the slurry is maintained in a range from 700 g/L to 1600g/L by the filtration return process, and a time period of the filtration return process is controlled in a range from 1 hour to 12 hours. That is, the sediments is separated by filtering and returned into the second reactor. A filtered liquid generated by filtering is drained off.

At step S4, the-reaction product generated at step S3 is transferred to an aging tank for further reactions, and then subjected to a solid-liquid separation. The separated sediments are washed with deionized water.

The reaction product generated at step S3 is transferred to the aging tank, a third alkaline solution is added to adjust a potential of hydrogen value of the aging tank to be between 10 and 13, and a solution is stirred to cause the unreacted nickel ions, cobalt ions and manganese ions to be sufficiently reacted with hydroxide ions in the reaction environment to generate sediments. The solid sediments in the aging tank is separated by a solid-liquid separation. In addition, a continuation of the reaction in the aging tank enables surface modification of the sediments, thereby improving the performance of the finally obtained product. Specifically, in the present application, the sediments and liquid in the aging tank are transferred to a plate-and-frame filter press for the solid-liquid separation to separate the solid sediments. The separated sediments are washed by deionized water until a potential of hydrogen value of the sediments is less than 8.

The third alkaline solution is also at least one of sodium hydroxide solution and potassium hydroxide solution.

At step S5, the sediments obtained at step S4 are dried in an oxygen-rich atmosphere to obtain the ternary precursor material.

In an embodiment, the sediments are mixtures of nickel hydroxide, cobalt hydroxide and manganese hydroxide at the atomic level. The sediments are dried at a temperature of 270 degrees Celsius to 350 degrees Celsius in an oxygen-rich atmosphere for 1 hour to 4 hours in a rotary kiln. The ternary precursor material has a porosity of 20% to 70%. The porosity of the ternary precursor material can be adjusted by adjusting a thickness ratio of the shell to the particle core. The particle core of the ternary precursor material has a pore diameter of 0.1 µm to 2 µm.

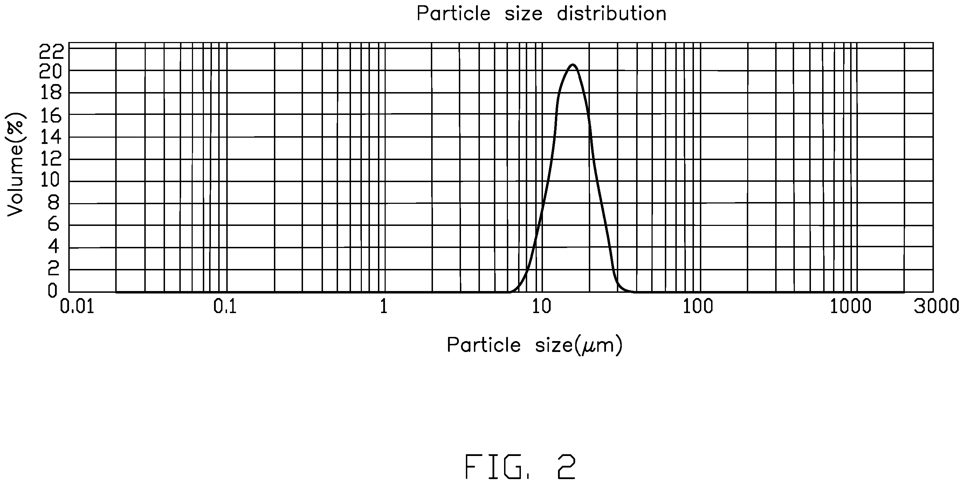

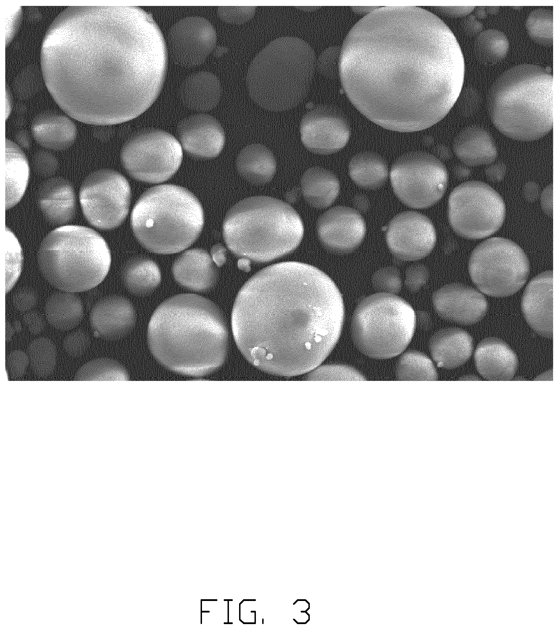

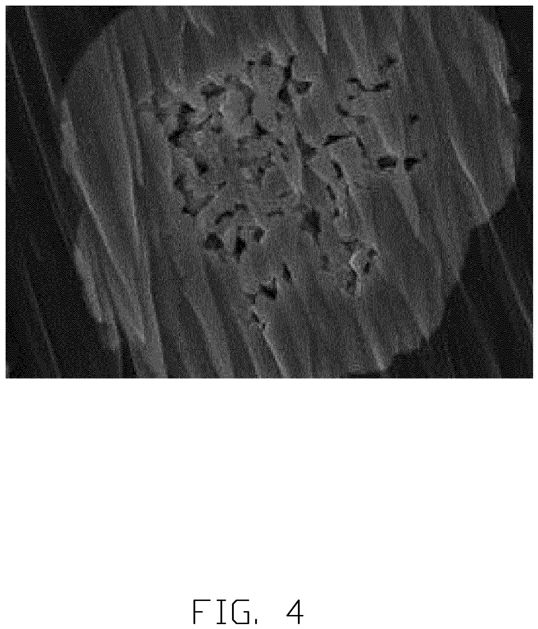

Referring to FIG. 2 to FIG. 4, the ternary precursor material has a molecular formula of NiₓCo_{y}Mn_{z}(OH)₂. Wherein, x+y+z=1, 0<x<1, 0<y<1, 0<z<1. The ternary precursor material is a spheroidal structure, and comprises a shell, a transition layer and a particle core surrounded by the shell. The shell is a dense structure, and the particle core is a loose porous structure. The transition layer is located between the shell and the particle core. A tap density of the shell, a tap density of the transition layer and a tap density of the particle core are different. The tap density of the shell is greater than the tap density of the particle core. The tap density of the transition layer is less than the tap density of the shell, and greater than the tap density of the particle core. A crystallinity of the shell is greater than a crystallinity of the transition layer, and the crystallinity of the transition layer is greater than a crystallinity of the particle core. The shell has a thickness of 0.5 µm to 10 µm. The density of the shell is greater than or equal to 2.5 g/cm³. Without doubt, a diameter and the density of the shell may be adjusted as actual needed, which is not limited in the present utility model. In addition, a diameter of the particle core of the ternary precursor material is less than 10 µm, and the density of the particle core is less than or equal to 3.0 g/cm³. A thickness of the transition layer is less than 2 µm.

In addition, the diameter of the shell and the diameter of the particle core are in a ratio of 1:1 to 1:9. The density of the particle core increases gradually from an interior of the particle core to a circumferential region of the particle core. Specifically, the density of the particle core distributes in a dense layered gradient, and the dense layered gradient of the particle core is between 2.0 g/cm³ to 4.2 g/cm³.

The ternary precursor material has a particle diameter of 1 µm to 40 µm. Further, D50 of the ternary precursor material is between 2 µm and 18 µm, and (D5+D95):D50 ≤ 2.2:1. Wherein, D50 denotes a diameter value of abscissa corresponding to 50% of ordinate accumulation distribution; D5 denotes a diameter value of abscissa corresponding to 5% of ordinate accumulation distribution; D95 denotes a diameter value of abscissa corresponding to 95% of ordinate accumulation distribution.

The present disclosure further provides a ternary material. The ternary material is formed by mixing the ternary precursor material and a lithium source and sintering in pure oxygen or air atmosphere at a temperature of 700 degrees Celsius to 1200 degrees Celsius. The lithium source is at least one of lithium hydroxide, lithium nitrate, lithium sulfate, lithium chloride, lithium fluoride, lithium carbonate, and lithium oxalate. The ternary material may be doped with at least one metal cation of Al, Ca, Na, Ti, Mg, Zr, and W, or doped with at least one anion of S, Cl, and F.

After the ternary material is assembled into a battery, the battery has a retention ratio greater than or equal to 88% after 2000 times of charge-discharge cycles under a rate of 20C.

The method for manufacturing the ternary precursor material provided by the present disclosure can control the morphology and particle size of the ternary precursor material. The method is simple and controllable, and is suitable for industrial production. In addition, the shell and the particle core of the ternary precursor material in the present disclosure have different crystal strengths. The ternary material made by the ternary precursor material has better rate performance and good cycle stability performance, and is suitable for use as a vehicle power battery.

### Embodiment 1

A nickel source, a cobalt source and a manganese source-were weighed according to a predetermined ratio and dissolved in deionized water to form a first mixed solution. Nickel ions, cobalt ions and manganese ions in the first mixed solution were in a molar ratio of 5:2:3.

The first mixed solution was added into a first reactor. The first reactor was a large liquid circulation flux reaction kettle having a liquid circulation flux of 25 m³/h. Then ammonium hydroxide and a first alkaline solution were added into the first reactor at a constant rate. A concentration of the ammonium hydroxide gradually increased from 0 g/L to 30 g/L, and a duration of the addition of the ammonium hydroxide were 12 hours. Hydroxide ions of the first alkaline solution and cations of the first mixed solution were in a molar ratio of 0.5. The first alkaline solution was sodium hydroxide solution.

A reacting temperature of reaction environment in the reactor was controlled to be 60 degrees Celsius. At this time, the first mixed solution reacted with hydroxide ions in the reaction environment to generate precipitation. The precipitation was crystal seed. The crystal seed had diameters ranging from 1 µm to 7 µm.

The crystal seeds obtained in the previous step reaction were added into a second reactor, then a second complexing agent, a second mixed solution, and a second alkaline solution were added into the second reactor to fully react and form a slurry comprising solid sediments. The second reactor was also a reaction kettle having a large liquid circulation flux, and the liquid circulation flux was 25 m³/h. The second complexing agent was ammonium hydroxide. The second alkaline solution was sodium hydroxide solution. Cations of the second mixed solution and hydroxide ions of the second alkaline solution were in a molar ratio of 1.

The second mixed solution was also formed by dissolving nickel nitrate, cobalt nitrate and manganese nitrate in deionized water, and nickel ions, cobalt ions and manganese ions were in a molar ratio of 5:2:3. A potential of hydrogen value of the second container during the reaction was between 10.5 and 12.8. A solid content of the slurry was controlled to be 1000g/L by means of the filtration return.

The reaction product obtained in previous step was transferred to an aging tank to continue to react, and a potential of hydrogen value of the aging tank was controlled to be 10. Then sediments and liquid in the aging tank were transferred to a filter press for the solid-liquid separation, and the sediments were washed by deionized water until a potential of hydrogen value was less than 8.

The sediments obtained in previous step were dried at a temperature of 300 degrees Celsius in an oxygen-rich atmosphere for 3 hours to obtain the ternary precursor material. D50 of a-precursor of the obtained ternary material was 16 µm.

### Embodiment 2

A nickel source, a cobalt source and a manganese source were weighed according to a predetermined ratio and dissolved in deionized water to form a first mixed solution. Nickel ions, cobalt ions and manganese ions in the first mixed solution were in a molar ratio of 3:3:3.

The first mixed solution was added into a first reactor. The first reactor was a large liquid circulation flux reaction kettle having a liquid circulation flux of 25 m³/h. Then ammonium hydroxide and a first alkaline solution were added into the first reactor at a constant rate. A concentration of the ammonium hydroxide gradually increased from 0 g/L to 15 g/L, and a duration of the addition of the ammonium hydroxide were 24 hours. Hydroxide ions of the first alkaline solution and cations of the first mixed solution were in a molar ratio of 1. The first alkaline solution was sodium hydroxide solution.

A reacting temperature of reaction environment in the reactor was controlled to be 40 degrees Celsius. At this time, the first mixed solution reacted with hydroxide ions in the reaction environment to generate precipitation. The precipitation was crystal seed. The crystal seed had diameters ranging from 3 µm to 9 µm.

The crystal seeds obtained in the previous step reaction were added into a second reactor, then an ammonium hydroxide, a second mixed solution, and sodium hydroxide solution were added into the second reactor to fully react and form a slurry comprising solid sediments. The second reactor was also a reaction kettle having a large liquid circulation flux, and the liquid circulation flux was 15 m³/h. The second complexing agent was ammonium hydroxide. The second alkaline solution was sodium hydroxide solution. Cations of the second mixed solution and hydroxide ions of the second alkaline solution were in a molar ratio of 1.5.

The second mixed solution was also formed by dissolving nickel sulfate, cobalt sulfate and manganese sulfate in deionized water, and nickel ions, cobalt ions and manganese ions were in a molar ratio of 3:3:3. A potential of hydrogen value of the second container during the reaction was between 11 and 12. A solid content of the slurry was controlled to be 700g/L by means of the filtration return.

The reaction product obtained in previous step was transferred to an aging tank to continue the reaction, and a potential of hydrogen value of the aging tank was controlled to be 11. Then sediments and liquid in the aging tank were transferred to a filter press for the solid-liquid separation, and the sediments were washed by deionized water until a potential of hydrogen value was less than 8.

The sediments obtained in previous step were dried at a temperature of 330 degrees Celsius in an oxygen-rich atmosphere for 3 hours to obtain the ternary precursor material. D50 of a precursor of the obtained ternary material-was 2 µm.

### Embodiment 3

A nickel source, a cobalt source and a manganese source_were weighed according to a predetermined ratio and dissolved in deionized water to form a first mixed solution. Nickel ions, cobalt ions and manganese ions in the first mixed solution were in a molar ratio of 8:1:1.

The first mixed solution was added into a first reactor. The first reactor was a large liquid circulation flux reaction kettle having a liquid circulation flux of 40 m³/h. Then ammonium hydroxide and a first alkaline solution were added into the first reactor at a constant rate. A concentration of the ammonium hydroxide gradually increased from 0 g/L to 45 g/L, and a duration of the addition of the ammonium hydroxide were 1 hours. Hydroxide ions of the first alkaline solution and cations of the first mixed solution were in a molar ratio of 1.5. The first alkaline solution was sodium hydroxide solution.

A reacting temperature of reaction environment in the first reactor was controlled to be 80 degrees Celsius. At this time, the first mixed solution reacted with hydroxide ions in the reaction environment to generate precipitation. The precipitation was crystal seed. The crystal seed had diameters ranging from 1 µm to 9 µm.

The crystal seeds obtained in the previous step reaction were added into a second reactor, then a second complexing agent, a second mixed solution, and a second alkaline solution were added into the second reactor to fully react and form a slurry comprising solid sediments. The second reactor was also a reaction kettle having a large liquid circulation flux, and the liquid circulation flux was 40 m³/h. The second complexing agent was ammonium hydroxide. The second alkaline solution was sodium hydroxide solution. Cations of the second mixed solution and hydroxide ions of the second alkaline solution were in a molar ratio of 1.

The second mixed solution was also formed by dissolving nickel chloride, cobalt chloride and manganese chloride in deionized water, and nickel ions, cobalt ions and manganese ions were in a molar ratio of 8:1:1. A potential of hydrogen value of the second container during the reaction was between 10.5 and 11.5. A solid content of the slurry was controlled to be 1600g/L by means of the filtration return.

The reaction product obtained in previous step was transferred to an aging tank to continue the reaction, and a potential of hydrogen value of the aging tank was controlled to be 13. Then sediments and liquid in the aging tank were transferred to a filter press for the solid-liquid separation, and the sediments were washed by deionized water until a potential of hydrogen value was less than 8.

The sediments obtained in previous step were dried at a temperature of 350 degrees Celsius in an oxygen-rich atmosphere for 3 hours to obtain the ternary precursor material. D50 of a precursor of the obtained ternary material was 18 µm.

### Embodiment 4

A nickel source, a cobalt source and a manganese source were weighed according to a predetermined ratio and dissolved in deionized water to form a first mixed solution. Nickel ions, cobalt ions and manganese ions in the first mixed solution were in a molar ratio of 8:1:1.

The first mixed solution was added into a first reactor. The first reactor was a large liquid circulation flux reaction kettle having a liquid circulation flux of 30 m³/h. Then ammonium hydroxide and a first alkaline solution were added into the first reactor at a constant rate. A concentration of the ammonium hydroxide gradually increased from 0 g/L to 40 g/L, and a duration of the addition of the ammonium hydroxide were 5 hours. Hydroxide ions of the first alkaline solution and cations of the first mixed solution were in a molar ratio of 0.5. The first alkaline solution was sodium hydroxide solution.

A potential of hydrogen value of reaction environment in the first reactor was controlled to be 12, and a reacting temperature of reaction environment in the first reactor was controlled to be 70 degrees Celsius. At this time, the first mixed solution reacted with hydroxide ions in the-reaction environment to generate precipitation. The precipitation was crystal seed. The crystal seed had diameters ranging from 5 µm to 9 µm.

The crystal seeds obtained in the previous step reaction were added into a second reactor, then a second complexing agent, a second mixed solution, and a second alkaline solution were added into the second reactor to fully react and form a slurry comprising solid sediments. The second reactor was also a reaction kettle having a large liquid circulation flux, and the liquid circulation flux was 30 m³/h. The second complexing agent was ammonium hydroxide. The second alkaline solution was sodium hydroxide solution. Cations of the second mixed solution and hydroxide ions of the second alkaline solution were in a molar ratio of 0.8.

The second mixed solution was also formed by dissolving nickel sulfate, cobalt sulfate and manganese sulfate in deionized water, and nickel ions, cobalt ions and manganese ions were in a molar ratio of 8:1:1. A potential of hydrogen value of the second container during the reaction was between 11.5 and 12.8. A solid content of the slurry was controlled to be 1200g/L by means of the filtration return.

The reaction product obtained in previous step was transferred to an aging tank to continue the reaction, and a potential of hydrogen value of the aging tank was controlled to be 12. Then sediments and liquid in the aging tank were transferred to a filter press for the solid-liquid separation, and the sediments were washed by deionized water until a potential of hydrogen value was less than 8.

The sediments obtained in previous step were dried at a temperature of 300 degrees Celsius in an oxygen-rich atmosphere for 3 hours to obtain the ternary precursor material. D50 of a precursor of the obtained ternary material was 15 µm.

### Embodiment 5

A nickel source, a cobalt source and a manganese source were weighed according to a predetermined ratio and dissolved in deionized water to form a first mixed solution. Nickel ions, cobalt ions and manganese ions in the first mixed solution were in a molar ratio of 6:2:2.

The first mixed solution was added into a first reactor. The first reactor was a large liquid circulation flux reaction kettle having a liquid circulation flux of 25 m³/h. Then ammonium hydroxide and a first alkaline solution were added into the first reactor at a constant rate. A concentration of the ammonium hydroxide gradually increased from 0 g/L to 20 g/L, and a duration of the addition of the ammonium hydroxide were 20 hours. Hydroxide ions of the first alkaline solution and cations of the first mixed solution were in a molar ratio of 0.5. The first alkaline solution was sodium hydroxide solution.

A reacting temperature of reaction environment in the first reactor was controlled to be 70 degrees Celsius. At this time, the first mixed solution reacted with hydroxide ions in the reaction environment to generate precipitation. The precipitation was crystal seed. The crystal seed had diameters ranging from 1 µm to 9 µm.

The crystal seeds obtained in the previous step reaction were added into a second reactor, then a second complexing agent, a second mixed solution, and a second alkaline solution were added into the second reactor to fully react and form a slurry comprising solid sediments. The second reactor was also a reaction kettle having a large liquid circulation flux, and the liquid circulation flux was 30 m³/h. The second complexing agent was ammonium hydroxide. The second alkaline solution was sodium hydroxide solution. Cations of the second mixed solution and hydroxide ions of the second alkaline solution were in a molar ratio of 1.5.

The second mixed solution was also formed by dissolving nickel sulfate, cobalt sulfate and manganese sulfate in deionized water, and nickel ions, cobalt ions and manganese ions were in a molar ratio of 6:2:2. A potential of hydrogen value of the second container during the reaction was between 12 and 12.8. A solid content of the slurry was controlled to be 900g/L by means of the filtration return.

The reaction product obtained in previous step was transferred to an aging tank to continue the reaction, and a potential of hydrogen value of the aging tank was controlled to be 12.5. Then sediments and liquid in the aging tank were transferred to a filter press for the solid-liquid separation, and the sediments were washed by deionized water until a potential of hydrogen value was less than 8.

The sediments obtained in previous step were dried at a temperature of 270 degrees Celsius in an oxygen-rich atmosphere for 3 hours to obtain the ternary precursor material. D50 of a precursor of the obtained ternary material was 8 µm.

### Embodiment 6

A nickel source, a cobalt source and a manganese source were weighed according to a predetermined ratio and dissolved in deionized water to form a first mixed solution. Nickel ions, cobalt ions and manganese ions in the first mixed solution were in a molar ratio of 4:4:2.

The first mixed solution was added into a first reactor. The first reactor was a large liquid circulation flux reaction kettle having a liquid circulation flux of 25 m³/h. Then ammonium hydroxide and a first alkaline solution were added into the first reactor at a constant rate. A concentration of the ammonium hydroxide gradually increased from 0 g/L to 20 g/L, and a duration of the addition of the ammonium hydroxide were 20 hours. Hydroxide ions of the first alkaline solution and cations of the first mixed solution were in a molar ratio of 0.5. The first alkaline solution was sodium hydroxide solution.

A reacting temperature of reaction environment in the first reactor was controlled to be 70 degrees Celsius. At this time, the first mixed solution reacted with hydroxide ions in the reaction environment to generate precipitation. The precipitation was crystal seed. The crystal seed had diameters ranging from 1 µm to 9 µm.

The crystal seeds obtained in the previous step reaction were added into a second reactor, then a second complexing agent, a second mixed solution, and a second alkaline solution were added into the second reactor to fully react and form a slurry comprising solid sediments. The second reactor was also a reaction kettle having a large liquid circulation flux, and the liquid circulation flux was 30 m³/h. The second complexing agent was ammonium hydroxide. The second alkaline solution was sodium hydroxide solution. Cations of the second mixed solution and hydroxide ions of the second alkaline solution were in a molar ratio of 1.5.

The second mixed solution was also formed by dissolving nickel sulfate, cobalt sulfate and manganese sulfate in deionized water, and nickel ions, cobalt ions and manganese ions were in a molar ratio of 6:2:2. A potential of hydrogen value of the second container during the reaction was between 12 and 12.8. A solid content of the slurry was controlled to be 900g/L by means of the filtration return.

The reaction product obtained in previous step was transferred to an aging tank to continue the reaction, and a potential of hydrogen value of the aging tank was controlled to be 12.5. Then sediments and liquid in the aging tank were transferred to a filter press for the solid-liquid separation, and the sediments were washed by deionized water until a potential of hydrogen value was less than 8.

The sediments obtained in previous step were dried at a temperature of 270 degrees Celsius in an oxygen-rich atmosphere for 3 hours to obtain the ternary precursor material. D50 of a precursor of the obtained ternary material was 8 µm.

## Claims

1. A method for manufacturing the ternary precursor material, comprising:
S1, weighing a nickel source, a cobalt source and a manganese source according to a predetermined ratio and dissolving the nickel source, the cobalt source and the manganese source in deionized water to form a first mixed solution, to cause a molar ratio of nickel ions, cobalt ions and manganese ions in the first mixed solution to be a predetermined ratio;
S2, adding the first mixed solution and a first alkaline solution into a first reactor, and adding a first complexing agent into the first reactor, the first mixed solution reacting with hydroxide ions in the first reactor to generate crystal seeds;
S3, adding the crystal seeds generated at S2 into a second reactor, and adding a second complexing agent, a second mixed solution formed by dissolving a nickel source, a cobalt source and a manganese source in deionized water, and a second alkaline solution into the second reactor to react and form a slurry comprising sediments, a solid content of the slurry controlled to be within a predetermined range;
S4, transferring the slurry formed at S3 to an aging tank to continue to react, performing a solid-liquid separation, and washing the separated sediments with deionized water;
S5, drying the sediments obtained at S4 in an oxygen-rich atmosphere to obtain the ternary precursor material.

2. The method for manufacturing the ternary precursor material of claim 1, wherein the first reactor and the second reactor are reaction kettles having a large liquid circulation flux.

3. The method for manufacturing the ternary precursor material of claim 2, wherein at step S1, the first complexing agent is continuously added into the first reactor at a predetermined rate, and a time period for continuously adding the first complexing agent is between 1 hour and 24 hours.

4. The method for manufacturing the ternary precursor material of claim 1, wherein at step S2, a potential of hydrogen value in the first reactor is between 10.5 and 12.8, a reacting temperature in the first reactor is between 40 degrees Celsius and 80 degrees Celsius.

5. The method for manufacturing the ternary precursor material of claim 1, wherein at step S2, the crystal seeds has a diameter ranging from 1 µm to 9 µm.

6. The method for manufacturing the ternary precursor material of claim 1, wherein at step S3, the slurry has a solid content of 700 g/L to 1600g/L.

7. The method for manufacturing the ternary precursor material of claim 1, wherein at step S3, a potential of hydrogen value in the second reactor is between 10.5 and 12.8.

8. The method for manufacturing the ternary precursor material of claim 1, wherein at step S5, a temperature of drying is between 270 degrees Celsius and 350 degrees, and a time period of drying is between 1 hour and 4 hours.

9. A ternary precursor material having:
a molecular formula of NiₓCo_{y}Mn_{z}(OH)₂;
wherein, x+y+z=1, 0 < x < 1, 0 < z < 1, the ternary precursor is a spheroidal structure, and comprises a shell, a particle core and a transition layer; the shell is a dense structure, and the particle core is a loose porous structure; the transition layer is located between the shell and the particle core, the ternary precursor material is a mixture of nickel hydroxide, cobalt hydroxide and manganese hydroxide at the atomic level, a crystallinity of the shell is greater than a crystallinity of the particle core, and a crystallinity of the transition layer is between the crystallinity of the shell and the crystallinity of the particle core.

10. The ternary precursor material of claim 9, wherein D50 of the ternary precursor material is between 2 µm and 18 µm, and (D5+D95):D50 ≤ 2.2:1.

11. The ternary precursor material of claim 9, wherein the shell has a thickness of 0.5 µm to 10 µm, a thickness of the transition layer is less than 2 µm, a diameter of the particle core of the ternary precursor material is less than 10 µm; a tap density of the shell is greater than a tap density of the particle core, the tap density of the shell is greater than or equal to 2.5 g/cm³, the tap density of the particle core is less than or equal to 3.0 g/cm³.

12. The ternary precursor material of claim 9, wherein the diameter of the shell of the nary precursor and the diameter of the particle core are in a ratio of 1:1 to 9:1.

13. The ternary precursor material of claim 9, wherein the density of the particle core of the nary precursor increases gradually from an interior to a circumferential region.

14. The ternary precursor material of claim 9, wherein the particle core of the ternary precursor has a pore diameter of 0.1 µm to 2 µm.

15. The ternary precursor material of claim 9, wherein the ternary material precursor material has a porosity of 20% to 70%.
